# EUROPEAN PATENT SPECIFICATION

(11) **EP 1 079 120 B1**
(45) Date of publication and mention of the grant of the patent: **07.04.2004**
(21) Application number: 00305919.3
(22) Date of filing: 12.07.2000
(51) Int. Cl.: F15B 21/04, F16N 7/32

(54) **Apparatus for conditioning a gaseous medium**
Druckluftwartungseinheit
Unité d'entretien pour l'air comprimé

(30) Priority: 24.07.1999 GB 9917353
(43) Date of publication of application: 28.02.2001
(73) Proprietor: IMI NORGREN LIMITED, Lichfield Staffordshire, WS13 6SB (GB)
(72) Inventor: Webb, Adrian C., Stratford-on-Avon, Warwickshire CV37 8SQ (GB); Harrold, Martyn J., Stratford-on-Avon, Warwickshire CV37 8PJ (GB)
(74) Representative: Makovski, Priscilla Mary

(56) References cited:
- GB-A- 482 263
- US-A- 2 730 269
- US-A- 3 945 465

## Description

This invention relates to apparatus for conditioning a gaseous medium.

The apparatus is primarily intended to condition compressed air and hereinafter the specification refers mainly to such an application although the apparatus may be used, where appropriate, to condition other gaseous media. By the term "condition" we mean any treatment including, but -not limited to, filtration so as to remove, for example, oil mist and/or water mist and/or solid particles from the air, regulation of pressure and/or of flow rate of the air, or controlled lubrication of the air.

In order to ensure adequate service life and functioning of equipment that controls or utilises compressed air, for example pneumatic control valves and pneumatic cylinders, it is conventional practice to condition (or "prepare") the air before it is fed to the equipment and for that purpose the air is passed through an air preparation apparatus. Such an apparatus usually comprises a filter unit and a pressure regulating unit, optionally where required together with a lubricating unit, the units being joined together adjacent to one another, with the air passing sequentially through them. For example, in spray gun applications where clean and dry, but unlubricated, air is required, the apparatus may comprise a filter unit and a pressure regulating unit (which are often integrated into a single unit). On the other hand, in pneumatic control valve/cylinder applications that require lubricated air, the apparatus will additionally comprise a lubricating unit.

In any case, the filter and lubricating units each conventionally include a depending bowl which, respectively, contain a filter element and collect filtered-out liquid/solids and contain lubricating oil. The bowls, which are usually made of a polycarbonate or metal, render the apparatus somewhat bulky.

US 3 945 465 (Vander Horst et al) discloses a multi-function air treatment unit having a tubular filter, a pressure regulator and a lubricator. The unit comprises two bowls depending from the main body.

It is an object of the present invention to provide an apparatus for conditioning a gaseous medium which, in particular, dispenses with the need for depending bowls and so is relatively compact compared to traditional designs.

According to the present invention, there is provided apparatus for conditioning a gaseous medium, for example compressed air, comprising an elongate, hollow body having, at or adjacent to one end thereof and in communication with the hollow interior of the body, an inlet for the gaseous medium to be conditioned and, at or adjacent to the other end thereof and in communication with the hollow interior of the body, an outlet for the conditioned medium, the body housing in its hollow interior a pressure regulating unit and at least one other conditioning unit arranged in substantially end-to-end relationship whereby, in use, gaseous medium supplied to the inlet will flow, wholly within the confines of the body, to the outlet *via*, sequentially, said pressure regulating unit and each other conditioning unit, and in which said fluid pressure regulating unit comprises, within said body, a fluid inlet and a fluid outlet, an orifice located intermediate the inlet and outlet, a valve closure located adjacent to the inlet side of the orifice and moveable towards and away from the orifice, a first compression spring to bias the valve closure towards the orifice, an axially slidable piston located adjacent to the outlet side of the orifice, a second compression spring to bias the piston towards the orifice, a projection on the piston extending coaxially through the orifice into contact with the valve closure, a passageway extending through the piston so as to provide communication between the orifice and the outlet, and adjusting means to vary, via the second compression spring, the axial position of the piston relative to the orifice and hence the position of the valve closure relative to the orifice, the arrangement being such that, in use, fluid flowing from the inlet to the outlet via the orifice and the passageway in the piston exerts a force on the piston opposing the force exerted thereon by the second compression spring, whereby the piston and hence the valve closure tend dynamically to adopt respective positions in which said opposing forces are substantially balanced so as to provide a substantially constant output pressure at the outlet for a given position of the adjusting means.

The elongate body is preferably generally cylindrical in form, although in principle it could, for example, be of generally rectangular or other cross-section. Preferably, it comprises one or more plastics mouldings although any suitable material may be used.

The body houses, at least, one other conditioning unit selected from a filter unit and a lubricating unit. For example, in one embodiment, the apparatus may comprise a filter unit and a pressure regulating unit disposed in the housing substantially in end-to-end relationship usually so that the compressed air flows first through the filter unit and then through the pressure regulating unit. Thereagain, the body may house a filter unit, a pressure regulator and a lubricating unit (and thus constitute an "FRL" as it is commonly called in the compressed air industry and hereinafter) substantially in end-to-end relationship, the air passing sequentially through the three units in that order. In any event, the body may additionally house an on/off valve.

In a preferred embodiment, the compressed air inlet and outlet include respective fittings secured axially in the otherwise closed, opposed ends of the elongate hollow body for connection to, and disconnection from, "in-line" compressed air supply and delivery pipelines. The fittings are preferably releasable push-in fittings, but any suitable form of pipe connection may be employed.

Details of preferred embodiments of such a pressure regulator are described below with reference to the drawings.

The present invention further provides a method of conditioning a gaseous medium, especially compressed air, which comprises passing the medium through apparatus as defined above.

FRL apparatus constructed in accordance with the invention will now be described in more detail, by way of example only, with reference to the accompanying drawings in which:
**Fig 1** is a perspective view of one design of FRL apparatus;
**Fig 2** is a cross-sectional side elevation of the FRL apparatus shown in Fig 1;
**Fig 3** is a cross-sectional side elevation, on a larger scale of a pressure regulator;
**Fig 4** is a side elevation of an alternative design of FRL apparatus; and
**Fig 5** is a cross-sectional side elevation of the FRL apparatus shown in Fig 4.

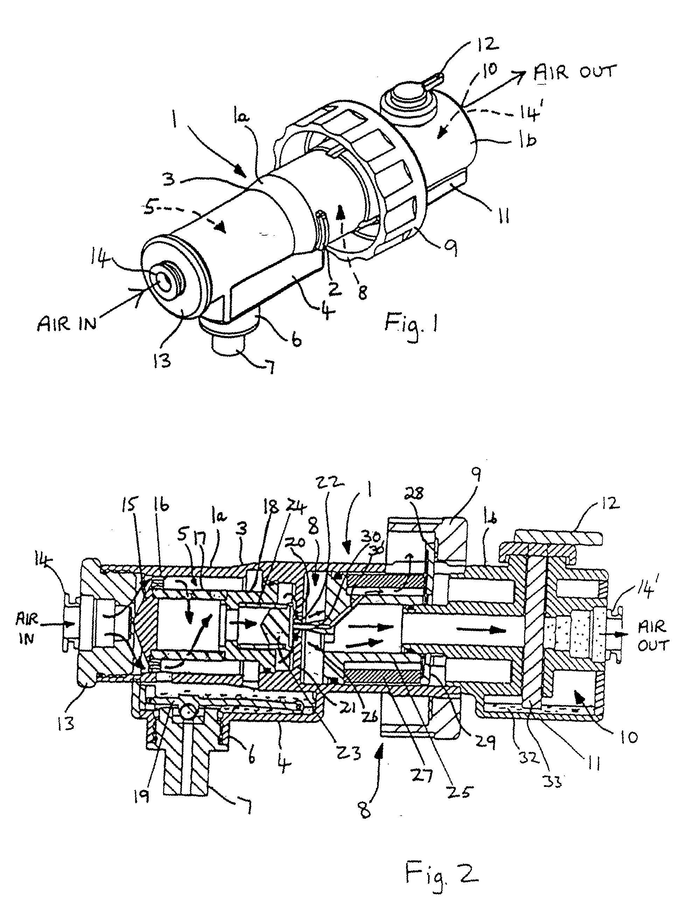

Referring first to Fig 1, and so particularly to its external features, the FRL comprises a body designated generally 1 which in fact comprises two separately moulded parts 1a and 1b secured together. The body 1 is generally cylindrical and, in order to accommodate the pressure regulating unit (see below with reference to Fig 2), it increases slightly in external diameter at 3. Further, the body part 1a has a basal, generally cuboid projection integrally formed with it which defines a shallow sump 4 for liquids and solid particles filtered out of the air by a filter unit 5 housed in the body part 1a. The sump is formed with a boss 6 for connection to an automatic drain outlet 7 from which filtered-out liquids and solids periodically drain from the sump 4.

The body part 1a also houses, in line with the filter unit 5, a pressure regulator 8 which is adjustable by the user by rotating an annular hand wheel 9. The regulator 8 serves to regulate the output pressure of the compressed air.

The body part 1b houses a lubricator unit 10 and has a basal, generally cuboid projection integrally formed with it which defines a shallow sump 11 for containing lubricating oil for lubricating the compressed air before it exits from the FRL apparatus to a point of use. The degree of lubrication may be varied by rotating a lever 12.

The air inlet end of body part 1a is closed by a plug 13 which incorporates a push-in pipe fitting 14 for connecting a compressed air supply pipeline (not shown) to the FRL apparatus. A like fitting 14' (not visible in Fig 1, but see Fig 2) is secured into the end of the body part 1b for connection to a compressed air delivery pipeline (not shown). The apparatus may therefore be connected up in "in-line" fashion.

Finally with reference to Fig 1, the body part 1a is also formed with a small arcuate projection 2 which houses a coloured band type of pressure gauge.

Referring now to Fig 2, the construction of the filter, pressure regulating and lubricating units can be seen more clearly. Compressed air fed from a compressor (not shown) first passes through the filter unit 5, as indicated by the arrows, housed in the body part 1a. The filter unit comprises, at its left hand end, a conically shaped diffuser 15 formed on its basal periphery with louvres 16. The diffuser 15/louvres 16 serve to deflect the incoming compressed air generally in a radially outwards direction and, in so doing, liquid contaminants, such as compressor oil droplets and water droplets are "thrown" against the internal wall of the body part 1a on which they coalesce and then run down the wall into the sump 4. The air then passes through an annular filter element 17, made for example of porous, sintered material which serves to remove particulate solid contaminants. The filter element 17 is supported horizontally at one end by the diffuser 15 and at its other end by annular retainer 18. As can be seen from the arrows, the air passes radially from the outside of the filter element 17 to its interior whence it flows axially to the adjacent pressure regulator 8. In general terms, therefore, the filter unit described above functions in a similar way to conventional compressed air filters. However, because of the horizontal arrangement of the diffuser 15 and the filter element 17, as distinct from the conventional vertical one, there is no need for a depending bowl for housing them and collecting the filtrate, the filtrate instead collecting in the sump 4. Liquid and solid contaminants that collect in the sump 4 are periodically drained off via the outlet 7 by means of an automatic float valve 19, the operation of which will be self-evident.

The pressure regulator 8 comprises an annular seat 20 defined by a flange 21 formed integrally with the body part 1a, the flange having a central orifice 22 which is surrounded by the seat 20. An axially movable valve closure 23 is biassed towards the seat 20 by a compression spring 24 which is coaxially seated in the retainer 18. The axial position of the closure 23 relative to the seat 20 governs the compressed air output pressure of the apparatus. The regulator 8 further comprises a hollow piston 25 which is sealingly and slidably mounted in the body part 1a and the piston is formed with an axially extending nozzle 26 which projects through the orifice 22. The piston 25, and thus the nozzle 26, are biassed towards the valve closure 23 by a compression spring 27, the degree of compression of which may be varied by means of an adjusting mechanism, which will now be described in more detail.

The adjusting mechanism comprises an annular hand wheel 9 which is threadedly mounted on the external surface of the body part 1a. The hand wheel abuts a projection 28 formed on an annular thrust washer 29 and which extends radially outwardly through a slot formed in the wall of the body member 1a. The washer 29 in turn abuts the right hand end of the spring 27. Hence, by rotating the hand wheel 9 in one or the other directions, a greater or smaller compression of the spring 27 is effected and this in turn will affect the axial location of the piston 25. For example, by tending to increase the compression in the spring 27, the piston 25 will be displaced leftwards, as of course will be the nozzle 26. The nozzle 26 will, therefore, displace the valve member 23 away from the seat 20 thereby causing the outlet air pressure to increase. Conversely, the pressure may be decreased by rotating the hand wheel 9 in the opposite direction. As will be appreciated, at steady state, the piston 25 will adopt an equilibrium position in which the force exerted on it, primarily by the compressed air acting on its left hand face, balances the opposing force exerted on it by the spring 27. If the supply pressure prevailing at the inlet increases, the piston 25 will be displaced rightwards whereupon the nozzle 26 becomes spaced from the valve member 23, which will close against the seat 20, and air will escape through an exhaust passageway 30, 30' to atmosphere, as indicated by the arrows, until the outlet pressure has reduced towards its pre-set value as determined by the setting of the hand wheel 9. Conversely, a reduction in the outlet pressure below the set value will cause the piston to be displaced leftwards from its equilibrium position by the spring 27 thereby opening the valve member 23 further until the pre-set output pressure value is again attained. The pressure regulator 8 therefore serves to provide a substantially constant output pressure.

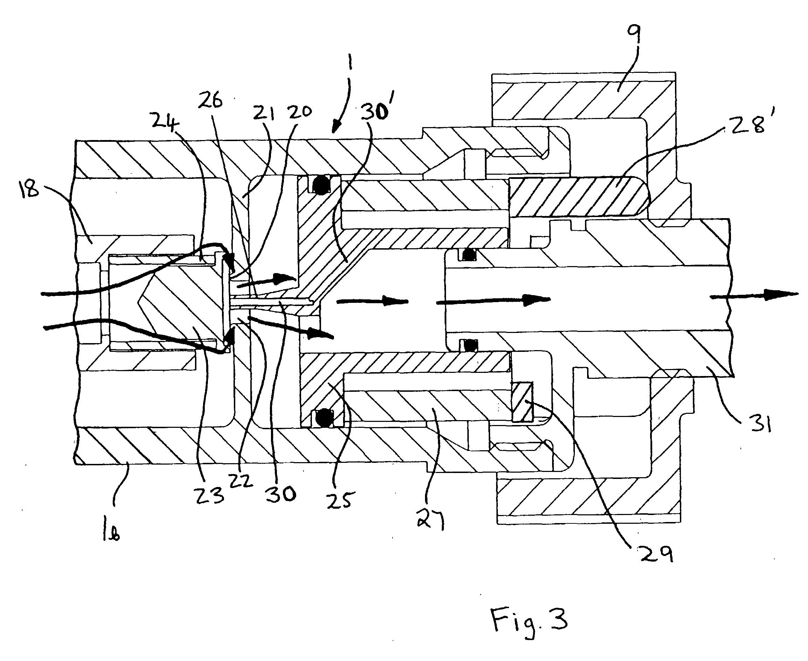

Fig 3 illustrates a slightly modified pressure regulator 8 and is to a larger scale so as to show more clearly the construction of the regulator described above. Similar parts bear the same reference numerals used in Fig 2.

The main difference from the regulator shown in Fig 2 resides in the construction of the pressure adjusting mechanism. Thus, in the Fig 3 embodiment, the hand wheel 9, rather than being threadedly mounted on the external surface of the body part 1a, is threadedly mounted on a spigot 31 secured in the body part 1a. Further, the thrust washer 29, rather than having a radial projection 28, has an axial projection 28' engaged by the hand wheel 9. The mechanism operates in an identical fashion to that of Fig 2.

Turning now to the lubricator section 10 of the FRL apparatus shown in Figs 1 and 2, this is comprised in body part 1b which is firmly secured end-to-end with the body part 1a. The base of the body- part 1b is formed with a generally cuboid projection constituting a sump 11 containing lubricating oil 32. A porous wick 33 depends into the oil 32 from a rotatable lever 12 mounted on the top of the body part 1b. In use, oil 32 is sucked up the wick 33 by capillary action. The wick 33 is of semi-cylindrical cross-section having, therefore, a flat surface and a curved surface. When the lever 12 is rotated such that the flat surface directly faces the air flow, the maximum possible surface area of the wick 33 is presented to the air and so the maximum amount of lubricant, in the form of minute oil droplets (as indicated by the dots in Fig 2), is entrained by the air as it passes over the wick 33. However, if the adjuster is rotated through 90°, the surface area of the wick 33 directly presented to the air will be at a minimum, resulting in a reduced degree of lubrication of the air. Intermediate degrees of lubrication may be achieved by rotating the lever 12 to positions between those two extremes. In general terms, wick lubricators of the above type are known, but the lubricator 10 illustrated differs from known designs in that the depending bowl is dispensed with, the oil 32 and the wick 33 instead being contained in the generally cylindrical body part 1b.

Thereafter, the filtered, pressure regulated and lubricated air is piped to a point or points of use.

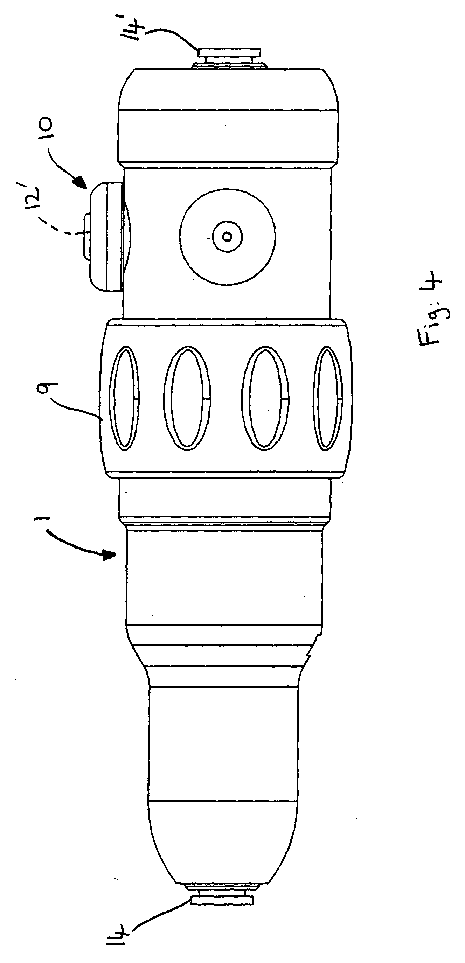

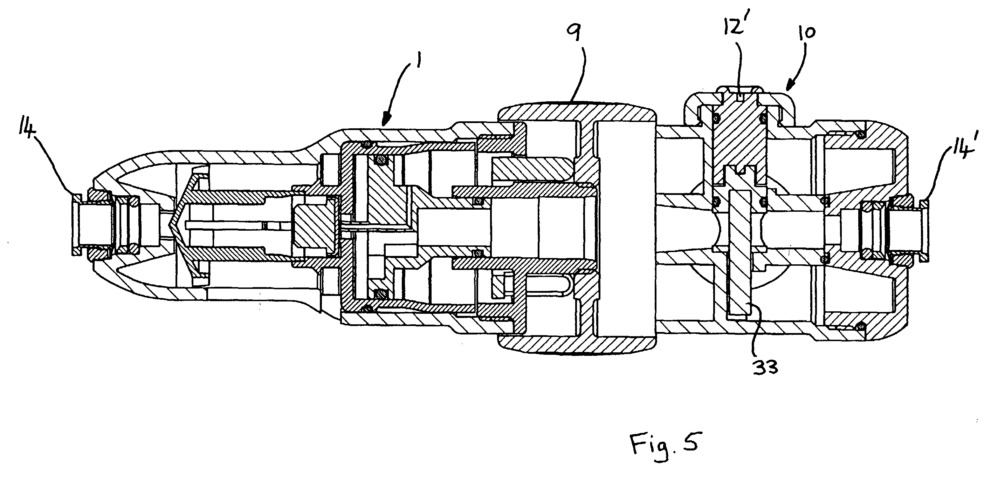

Figs 4 and 5 show an alternative FRL constructed in accordance with the invention. For the sake of clarity, most of the reference numerals have been omitted, but those included and referred to below are the same as those used for corresponding features of the embodiments shown in Figs 1 and 2.

As will be apparent, the FRL shown in Figs 4 and 5 differs primarily in respect of external appearance from the one shown in Figs 1 and 2. In particular, the body 1 is more 'streamlined', with the end portions tapering down, in a gentle curve, towards the couplings 14 and 14'. Further, the annular hand wheel 9, rather than being somewhat spaced from the external surface of the body 1, is located closely to it. Also, and with reference to the lubricator unit 10, the orientation of the wick 33 is adjustable by means of a screwdriver engageable in a slot 12', rather than by a lever 12.

Otherwise, the FRL shown in Figs 4 and 5 is very similar to that shown in Figs 1 and 2, but has a pressure adjusting mechanism more akin to that shown in Fig 3 of the drawings. As can be seen, the drain outlet 7 and its associated valve 19 have been omitted from Figs 4 and 5. However, as in the case of the embodiment illustrated in Figs 1 and 2, any suitable type of valve 19, whether manual or automatic, may be used. Likewise, numerous variations may be made to the internal parts of the FRL without departing from the invention.

In conclusion, it will be appreciated that, because the air flows substantially in one, axial, direction through the apparatus, the invention affords the possibility of providing a streamlined design of air preparation unit that, compared to traditional units, is relatively compact. As noted earlier, the unit may comprise, for example, just a filter unit and a regulator unit in which case, with reference to the embodiment illustrated in Figs I and 2, the lubricator unit 10 would be omitted and the outlet end of the body part 1a would be closed by a plug and pipe connector like, for example, the plug 13/connector 14 at the inlet end of the body part 1a.

## Claims

1. Apparatus for conditioning a gaseous medium, comprising an elongate, hollow body (1) having, at or adjacent to one end thereof and in communication with the hollow interior of the body, an inlet for the gaseous medium to be conditioned and, at or adjacent to the other end thereof and in communication with the hollow interior of the body (1), an outlet for the conditioned medium, the body (1) housing in its hollow interior a pressure regulating unit (8) and at least one other conditioning unit arranged in substantially end-to-end relationship whereby, in use, gaseous medium supplied to the inlet will flow, wholly within the confines of the body (1), to the outlet *via*, sequentially, said pressure regulating unit (8) and each other conditioning unit (5, 8, 10), and in which said pressure regulating unit (8) comprises, within said body (1), a fluid inlet thereto and a fluid outlet therefrom, an orifice (22) located intermediate said fluid inlet and said fluid outlet, a valve closure (23) located adjacent to the inlet side of the orifice (22) and moveable towards and away from the orifice (22), a first compression spring (24) to bias the valve closure (23) towards the orifice (22), an axially slidable piston (25) located adjacent to the outlet side of the orifice (22), a second compression spring (27) to bias the piston (25) towards the orifice (22), a projection (26) on the piston (25) extending coaxially through the orifice into contact with the valve closure (23), a passageway extending through the piston (25) so as to provide communication between the orifice (22) and the fluid outlet, and adjusting means (9) to vary, via the second compression spring (27), the axial position of the piston (25) relative to the orifice (22) and hence the position of the valve closure (23) relative to the orifice (22), the arrangement being such that, in use, fluid flowing from the fluid inlet to the fluid outlet via the orifice (22) and the passageway in the piston (25) exerts a force on the piston (25) opposing the force exerted thereon by the second compression spring (27), whereby the piston (25) and hence the valve closure (23) tend dynamically to adopt respective positions in which said opposing forces are substantially balanced so as to provide a substantially constant output pressure at the fluid outlet for a given position of the adjusting means (9).

2. Apparatus according to claim 1 wherein the body (1) is generally cylindrical in form.

3. Apparatus according to claim 1 or claim 2 wherein the body (1) houses at least one other conditioning unit selected from a filter unit (5) and a lubricating unit (10).

4. Apparatus according to any one of claims 1 to 3 wherein the body houses a filter unit (5), a pressure regulating unit (8) and a lubricating unit (10), the gaseous medium passing, in use, sequentially therethrough in that order.

5. Apparatus according to any one of claims 1 to 4 wherein the body (1) additionally houses a shut-off valve.

6. Apparatus according to any one of the claims 1 to 5 wherein the body (1) is provided, at each of its ends, with a pipe coupling (14, 14') defining, respectively, the said inlet and outlet, the couplings being located substantially on the longitudinal axis of the body (1) whereby the apparatus may be connected 'in line' with aligned supply and delivery pipework for the gaseous medium.

7. Apparatus according to any one of claims 1 to 6 including a filter unit (5) comprising a tubular filter element (17) mounted substantially coaxially within the body (1), the gaseous medium flowing, in use, substantially radially through the element from its exterior to its interior, or vice-versa, in order to become filtered.

8. Apparatus according to claim 1 wherein the adjusting means comprises an annular hand wheel (9) located externally of, and extending coaxially around, the said body (1).

9. A method of conditioning a gaseous medium, for example compressed air, which comprises passing the medium through apparatus according to any one of claims 1 to 8.

## Patentansprüche

1. Gerät zum Aufbereiten eines gasförmigen Mediums, das einen länglichen Hohlkörper (1) aufweist, der an seinem Ende oder angrenzend daran und in Verbindung mit dem hohlen Inneren des Körpers einen Einlass für das aufzubereitende gasförmige Medium, und der an seinem anderen Ende oder angrenzend daran und in Verbindung mit dem hohlen Inneren des Körpers (1) einen Auslass für das aufbereitete Medium hat, wobei der Körper (1) in seinem hohlen Inneren eine Druckregeleinheit (8) und zumindest eine andere Aufbereitungseinheit aufnimmt, die im wesentlichen in einem Ende-an-Ende zueinander stehenden Verhältnis angeordnet sind, wodurch in Gebrauch das zu dem Einlass zugeführte gasförmige Medium vollständig innerhalb der Begrenzung des Körpers (1) zu dem Auslass sequentiell durch die Druckregeleinheit (8) und jede andere Aufbereitungseinheit (5, 8, 10) strömen wird, und wobei die Druckregeleinheit (8) innerhalb des Körpers (1) einen Fluideinlass dort hinein und einen Fluidauslass dort heraus, eine sich zwischen dem Fluideinlass und dem Fluidauslass befindende Drossel (22), einen angrenzend an die Einlassseite der Drossel (22) befindenden und sich in Richtung zu und von der Drossel (22) weg bewegenden Ventilverschluss (23), und eine erste Druckfeder (24) zum Vorspannen des Ventilverschlusses (23) in Richtung der Drossel (22), einen sich angrenzend an die Auslassseite der Drossel (22) befindenden axial verschieblichen Kolben, eine zweite Druckfeder (27) zum Vorspannen des Kolbens (25) in Richtung der Drossel (22), einen Vorsprung (26) an dem Kolben (25), der sich koaxial durch die Drossel in Kontakt mit dem Ventilverschluss (23) erstreckt, einen sich durch den Kolben (25) erstreckenden Durchlass zum Vorsehen einer Verbindung zwischen der Drossel (22) und dem Fluidauslass und eine Einstelleinrichtung (9) zum Variieren der Axialposition des Kolbens (25) relativ zu der Drossel (22) über die zweite Druckfeder (27) und damit der Position des Ventilverschlusses (23) relativ zu der Drossel (22) aufweist, wobei die Anordnung so ist, dass im Gebrauch das von dem Fluideinlass zu dem Fluidauslass durch die Drossel (22) und den Durchlass in dem Kolben (25) strömende Fluid eine Kraft auf den Kolben (25) ausübt, die der darauf durch die zweite Druckfeder (27) ausgeübten Kraft gegenüber steht, wodurch der Kolben (25) und somit der Ventilverschluss (23) dazu neigen, dynamisch entsprechende Positionen anzunehmen, in denen die entgegengesetzten Kräfte im wesentlichen im Gleichgewicht stehen, um so einen im wesentlichen konstanten Ausgabedruck an dem Fluidauslass für eine vorgegebene Position der Einstelleinrichtung (9) vorzusehen.

2. Gerät gemäß Anspruch 1, wobei der Körper (1) eine im wesentlichen zylindrische Form hat.

3. Gerät gemäß Anspruch 1 oder 2, wobei der Körper (1) zumindest eine weitere Aufbereitungseinheit aufnimmt, die aus einer Filtereinheit (5) und einer Schmiereinheit (10) ausgewählt ist.

4. Gerät gemäß einem der Ansprüche 1 bis 3, wobei der Körper eine Filtereinheit (5), eine Druckregeleinheit (8) und eine Schmiereinheit (10) aufweist, wobei das gasförmige Medium im Gebrauch diese sequenziell in dieser Reihenfolge passiert.

5. Gerät gemäß einem der Ansprüche 1 bis 4, wobei der Körper (1) zusätzlich ein Absperrventil aufnimmt.

6. Gerät gemäß einem der Ansprüche 1 bis 5, wobei der Körper (1) an jedem seiner Enden mit einer Rohrkopplung (14, 14') versehen ist, die jeweils den Einlass und Auslass definieren, wobei sich die Kopplungen im wesentlichen an der Längsachse des Körpers (1) befinden, wodurch das Gerät "in Linie" mit einer ausgerichteten Zuführ- und Beschickungsrohrleitung für das gasförmige Medium verbunden sein kann.

7. Gerät gemäß einem der Ansprüche 1 bis 6 mit einer Filtereinheit (5), die ein röhrenförmiges Filterelement (17) aufweist, das im wesentlichen koaxial innerhalb des Körpers (1) montiert ist, wobei das gasförmige Medium im Gebrauch im wesentlichen radial durch das Element von dessen Äußerem zu dessen Innerem, oder umgekehrt, strömt, um gefiltert zu werden.

8. Gerät gemäß Anspruch 1, wobei die Einstelleinrichtung ein ringförmiges Handrad (9) aufweist, das sich außerhalb des Körpers (1) befindet und sich koaxial dort herum erstreckt.

9. Verfahren zum Aufbereiten eines gasförmigen Mediums, beispielsweise von Druckluft, welches den Schritt des Passierens des Mediums durch das Gerät gemäß einem der Ansprüche 1 bis 8 aufweist.

## Revendications

1. Appareil de conditionnement d'un milieu gazeux, comprenant un corps allongé creux (1) comportant, à ou adjacent à l'une de ses extrémités et en communication avec l'intérieur creux du corps, une entrée destinée au milieu gazeux à conditionner et, à ou adjacent à son autre extrémité et en communication avec la partie intérieure creuse du corps (1), une sortie destinée au milieu conditionné, le corps (1) logeant, dans sa partie intérieure creuse, un module (8) de régulation de pression et au moins un autre module de conditionnement agencé suivant une relation sensiblement bout à bout, ce par quoi, en utilisation, un milieu gazeux délivré à l'entrée s'écoule complètement à l'intérieur des confins du corps (1) vers la sortie, séquentiellement, via ledit module (8) de régulation de pression et chaque autre module (5, 8, 10) de conditionnement, et dans lequel ledit module (8) de régulation de pression comprend, à l'intérieur dudit corps (1), une entrée de fluide dans celui-ci et une sortie de fluide de celui-ci, un orifice (22) situé entre ladite entrée de fluide et ladite sortie de fluide, une fermeture sous forme de vanne (23) située adjacente au côté de l'entrée de l'orifice (22) et pouvant s'approcher et s'éloigner de l'orifice (22), un premier ressort (24) de compression servant à rappeler la fermeture sous forme de vanne (23) vers l'orifice (22), un piston pouvant coulisser axialement (25) situé adjacent au côté de la sortie de l'orifice (22), un second ressort (27) de compression pour rappeler le piston (25) vers l'orifice (22), une saillie (26) située sur le piston (25) s'étendant coaxialement à travers l'orifice en contact avec la fermeture sous forme de vanne (23), un passage s'étendant à travers le piston (25) de façon à établir une communication entre l'orifice (22) et la sortie de'fluide, et un moyen (9) de réglage pour faire varier, via le second ressort (27) de compression, la position axiale du piston (25) par rapport à l'orifice (22) et, donc, la position de la fermeture sous forme de vanne (23) par rapport à l'orifice (22), l'agencement étant tel que, en utilisation, un écoulement de fluide de l'entrée de fluide vers la sortie de fluide, via l'orifice (22) et le passage dans le piston (25), exerce une force sur le piston (25) s'opposant à la force exercée sur lui par le second ressort (27) de compression, ce par quoi le piston (25) et, donc, la fermeture sous forme de vanne (23) tendent, de manière dynamique, à adopter des positions respectives dans lesquelles lesdites forces s'opposant sont sensiblement équilibrées de façon à établir une pression de sortie sensiblement constante au niveau de la sortie de fluide pour une position donnée du moyen (9) de réglage.

2. Appareil selon la revendication 1, dans lequel le corps (1) a une forme globalement cylindrique.

3. Appareil selon la revendication 1 ou la revendication 2, dans lequel le corps (1) loge au moins un autre module de conditionnement choisi à partir d'un module (5) de filtre et d'un module (10) de lubrification.

4. Appareil selon l'une quelconque des revendications 1 à 3, dans lequel le corps loge un module (5) de filtre, un module (8) de régulation de pression et un module (10) de lubrification, le milieu gazeux, en utilisation, les traversant séquentiellement dans cet ordre.

5. Appareil selon l'une quelconque des revendications 1 à 4, dans lequel le corps (1) loge en plus une vanne d'arrêt.

6. Appareil selon l'une quelconque des revendications 1 à 5, dans lequel le corps (1) est pourvu, à chacune de ses extrémités, d'un raccord (14, 14') de tuyau définissant respectivement ladite entrée et ladite sortie, les raccords étant situés sensiblement sur l'axe longitudinal du corps (1), ce par quoi l'appareil peut être raccordé de manière " alignée " avec une tuyauterie d'alimentation et de délivrance alignée destinée au milieu gazeux.

7. Appareil selon l'une quelconque des revendications 1 à 6, incluant un module (5) de filtre comprenant un élément tubulaire (17) de filtre monté sensiblement coaxialement à l'intérieur du corps (1), le milieu gazeux s'écoulant, en utilisation, sensiblement radialement à travers l'élément de sa partie extérieure vers sa partie intérieure, ou vice versa, à des fins de filtration.

8. Appareil selon la revendication 1, dans lequel le moyen de réglage comprend une roue à main annulaire (9) située à l'extérieur, et s'étendant coaxialement autour, dudit corps (1).

9. Procédé de conditionnement d'un milieu gazeux, par exemple, d'air comprimé, qui comprend un passage du milieu à travers un appareil selon l'une quelconque des revendications 1 à 8.
